Europäisches Patentamt

European Patent Office

Office européen des brevets

(19)

(11) Numéro de publication: **0 011 535**
**B1**

(12)                          **FASCICULE DE BREVET EUROPEEN**

(45) Date de publication du fascicule du brevet: **21.09.83**

(21) Numéro de dépôt: **79400797.1**

(22) Date de dépôt: **26.10.79**

(51) Int. Cl.³: **B 29 C 3/00**, B 29 C 17/02, C 08 J 5/00, C 08 L 23/20

(54) Procédé de forgeage du polybutène-1 à l'état solide.

(30) Priorité: **30.10.78 FR 7830701**

(43) Date de publication de la demande: **28.05.80 Bulletin 80/11**

(45) Mention de la délivrance du brevet: **21.09.83 Bulletin 83/38**

(84) Etats contractants désignés: **AT BE CH DE GB IT LU NL**

(56) Documents cités:
**DE - A - 1 604 555**
**FR - A - 2 102 071**
**US - A - 4 014 965**

(73) Titulaire: **Société Chimique des Charbonnages Tour Aurore Place des Reflets Cédex no 5 F-92080 Paris La Défense 2 (FR)**

(72) Inventeur: **Kepes, André**
**22 Avenue de la Prise d'Eau**
**F-78110 Le Vesinet (FR)**
Inventeur: **Weynant, Eric**
**Les Néréides Avenue de Belgique**
**F-06350 Golfe Juan (FR)**
Inventeur: **Avenas, Pierre**
**Résidence de l'Hermitage 4, Allée des Sophoras**
**F-92330 Sceaux (FR)**
Inventeur: **Haudin, Jean-Marc**
**Résidence Turquoise Route de Saint-Jean**
**F-06600 Antibes (FR)**

(74) Mandataire: **Dubost, Thierry Pierre**
**Société Chimique des Charbonnages B.P. No. 1**
**Service Brevets**
**F-62160 Bully Les Mines (FR)**

Courier Press, Leamington Spa, England.

## Procédé de forgeage du polybutène-1 à l'état solide

La présente invention se rapporte à la transformation des matières plastiques en objets finis et plus particulièrement à la transformation du polybutène-1 à l'état solide.

On sait que le forgeage des matières thermoplastiques permet de fabriquer à bas prix certains objets finis de grande épaisseur et/ou de forme compliquée que le procédé d'injection-moulage ne permet pas de fabriquer dans des conditions satisfaisantes. Ainsi le forgeage du polypropylène et du polyéthylène est-il décrit dans les publications:

Society of Plastics Engineers 26th Annual Technical Conference, New-York, May 1968, pp. 225—230.

Plastics & Polymers, Vol. 38, April 1970, pp. 124—130.

Machine Design, May 3, 1973, pp. 94—99.

Les caractéristiques communes au forgeage du polyéthylène et du polypropylène consistent, selon ces publications, à chauffer la matière thermoplastique à quelques degrés centigrades en-dessous de son point de fusion et à la soumettre à une pression comprise entre 68,6 et 760 bars pendant une durée comprise entre 15 et 60 secondes.

Par ailleurs le brevet des Etats-Unis n° 4.014.965 décrit la fabrication d'objets finis en matière plastique par un procédé amélioré de transformation d'une poudre, ledit procédé étant caractérisé en ce qu'une poudre d'un polymère thermoplastique normalement à l'état solide est compactée en briquettes au moyen d'énergie vibratoire à une température inférieure à la température de fusion de la poudre et en ce que les briquettes sont ensuite forgées et transformées en objets de polymère fondu. Il est précisé dans ce document que les surfaces de contact de l'outillage de forgeage sont de préférence maintenues à une température égale à celle de la briquette. Les polymères thermoplastiques utilisables selon ce procédé sont par exemple les polymères d'alpha-oléfines telles que l'éthylène, le propylène, le butène-1 et l'isobutène. Les polymères particulièrement préférés sont ceux ayant une cristallinité élevée tels que notamment le polyéthylène et le polypropylène. Tous les exemples de ce brevet concernent un polyéthylène de densité 0.96 g/cm³. Ce brevet toutefois ne décrit pas de conditions pratiques dans lesquelles le polybutène-1 peut être transformé en objets finis par forgeage de manière satisfaisante. L'objet de la présente invention est donc de proposer un nouveau procédé de forgeage du polybutène-1.

Ce problème technique n'a pas pu être résolu simplement en transposant au polybutène-1 les procédés de forgeage du polyéthylène et du polypropylène évoqués ci-dessus, car le polybutène-1 se distingue de ces matières thermoplastiques par l'existence d'un phénomène de polymorphisme particulièrement complexe et soumis à l'effet de la pression, comme cela est exposé dans J. Macromol. Sci. (Phys.), B1 (2), pp. 309—334 (1967). Ce phénomène se traduit essentiellement par l'existence d'une forme cristalline métastable, dite forme II, fondant à 114°C, et d'une forme cristalline stable, dite forme I, fondant à 130°C. La prise en compte de ce phénomène a conduit à de longues études pour définir les conditions optimales, du point de vue industriel, du procédé de forgeage.

Ainsi la présente invention consiste en un procédé de transformation du polybutène-1 à l'état solide par chauffage préalable de polybutène-1 sous forme II à une température comprise entre 20° et 90°C, suivi de forgeage sous une pression comprise entre 784 et 9800 bars pendant une durée comprise entre environ 1 et 40 secondes.

Par polybutène-1 au sens de la présente invention on entend d'une part l'homopolymère et d'autre part les copolymères, séquencés ou statistiques, comprenant, à côté du butène-1, moins de 50% d'autres oléfines telles que l'éthylène et le propène. Parmi les homopolymères du butène-1 on préfère les polymères stéréoréguliers ayant un indice d'isotacticité (mesuré par la teneur en matière insoluble dans l'éther diéthylique bouillant) élevé, par exemple supérieur à 95%. Par polybutène-1 au sens de la présente invention on entend aussi les mélanges en toutes proportions des homopolymères et des copolymères décrits précédemment, ainsi que des mélanges de ces polymères avec des charges minérales telles que le talc par exemple.

Par forgeage au sens de la présente invention il faut entendre le procédé dit de forgeage en matrice fermée tel que décrit dans la publication Society of Plastics Engineers 26th Annual Technical Conference, New-York, May 1968, page 227 mentionnée plus haut en utilisant par exemple une presse hydraulique.

Une première condition nécessaire du procédé selon l'invention est que le polymère devant être forgé se trouve essentiellement sous forme II. En effet des essais de forgeage réalisés sur la forme I du polymère ont montré que les objets forgés présentent un retour élastique important quelle que soit la durée de l'opération de forgeage. Une seconde condition nécessaire du procédé selon l'invention est que le polymère doit être porté préalablement, par exemple au moyen d'un four muni d'un contrôle de température, à une température comprise entre 20 et 90°C, de préférence entre 40° et 80°C. Ceci assure que, tout en tenant compte de l'auto-échauffement provoqué par le forgeage, celui-ci sera bien effectué sur un matériau à l'état solide. On notera à cette occasion un avantage particulier du polybutène-1 par rapport au polyéthylène et au polypropylène, consistant en ceci que la température de préchauffage n'a pas besoin comme pour ces deux polymères d'être très proche du point de fusion mais peut être nettement plus basse, ce qui constitue un gain d'énergie appréciable.

Une troisième condition nécessaire du procédé selon l'invention est que la pression de forgeage à laquelle le polybutène-1 est soumis soit comprise entre 784 et 9800 bars, de préférence entre 1176 et 2940 bars. Une telle pression est supérieure aux pressions usitées pour le forgeage du polyéthylène ou du polypropylène. Enfin une quatrième condition nécessaire du procédé selon l'invention est que la durée pendant laquelle cette pression est appliquée au polybutène-1 soit comprise entre environ 1 et 40 secondes. Il a été trouvé en particulier inutile et même nuisible d'appliquer cette pression pendant une durée élevée comme on avait l'habitude de le faire pour d'autres polymères. En effet un maintien sous pression trop long endommage l'outillage utilisé pour appliquer la pression et diminue les cadences de fabrication sans pour autant procurer une amélioration de la qualité des objets forgés. Ainsi dans le cas de la plupart des objets finis désirés, un temps de maintien inférieur à 12 secondes sera suffisant.

En dehors des quatre conditions précédentes qui sont souhaitables pour la définition d'un procédé vraiment industriel et économique, le procédé selon l'invention présente d'autres paramètres qui ne sont pas critiques. Ainsi contrairement au cas du polypropylène et du polyéthylène pour lesquels on recommande — selon l'art antérieur — de préchauffer l'outillage (matrice et poinçon) à une température de 65° à 75°C, une telle précaution s'avère inutile dans le cas du forgeage du polybutène-1 et aucune difficulté technique n'a été recontrée en mettant en oeuvre le procédé selon l'invention au moyen d'un outillage froid. D'autre part on peut disposer le lopin de polybutène-1 de façon quelconque dans la matrice et des objets de qualité identique ont été obtenus en centrant exactement le lopin dans l'axe de la matrice, en le disposant excentré par rapport à cet axe ou bien encore en le disposant au hasard dans la matrice.

L'originalité du procédé selon l'invention réside encore dans le fait que, contrairement au procédé de forgeage du polypropylène pour lequel on ne semble pas avoir décrit des taux d'écrasement de la matière plastique — mesurés par la diminution d'épaisseur de l'échantillon entre le début et la fin de l'opération de forgeage — supérieurs à 63%, il est extrêment facile de réaliser selon l'invention des taux d'écrasement compris entre 65% et 85%.

Il est important de noter que le procédé selon l'invention s'accompagne d'une transformation cristalline instantanée du polybutène-1, celui-ci passant de la forme métastable II à la forme stable I pour l'essentiel. Cette transformation a été vérifiée en prélevant sur l'objet forgé un échantillon de matière qui a été analysé par les techniques bien connues d'analyse enthalpique différentielle et de diffraction du rayonnement X, deux techniques qui permettent de distinguer sans ambiguité la forme cristalline II fondant à 114°C de la forme cristalline I fondant à 130°C. On constate ainsi que la transformation cristalline de la forme II du polybutène-1 est complète dans les conditions du procédé selon l'invention alors que cette transformation n'est que partielle lorsqu'on s'écarte de ces conditions, notamment lorsque la pression appliquée est inférieure à 784 bars. La forme cristalline II de la matière de départ se transforme, sous l'effet du procédé selon l'invention, en forme cristalline I pour l'essentiel mais on note également, dans le spectre d'analyse enthalpique différentielle de certains produits forgés, la présence d'un pic de fusion pour une température de 119°C. Etant donné que le diagramme de rayonnement X de ces produits ne révèle pas de pics diffraction caractéristiques de la phase II, il faut en conclure que ce pic de fusion peut correspondre à la présence d'une nouvelle phase inconnue jusqu'à présent. Il est important de souligner que cette nouvelle phase ne nuit en rien à la stabilité des produits finis.

Le procédé selon l'invention s'avère d'une grande utilité pour la fabrication, à des prix de revient concurrentiels, de toutes sortes d'objets finis qui présenteront les caractéristiques mécaniques favorables de polybutène-1. Ces objets, tels que engrenages, brides de tuyau, raccords, rotors de pompe, roues, pouliers et pignons, pourront être de taille et de géométrie absolument quelconques. L'invention se rapporte donc également aux objets finis obtenus par le procédé décrité précédemment et qui ont pu ainsi pour la première fois être réalisés en polybutène-1.

L'invention sera mieux comprise par référence aux exemples suivants, qui sont donnés à titre ·illustratif et non limitatif.

### Exemple 1 (comparatif)

On considère une installation de forgeage comprenant une presse hydraulique capable d'appliquer des forces allant jusqu'à 500 tonnes et réglée sur une vitesse de 4 mm/s, une matrice cylindrique de diamètre 50 mm et un poinçon de diamètre égal. On considère un lopin cylindrique de polybutène-1 homopolymère isotactique en forme I, d'indice de fluidité égal à 0,5 g/10 mn, de diamètre 20 mm et de hauteur 30 mm. On dispose ce lopin, maintenu à la température de 20°C avant le début de l'opération de forgeage, au fond de la matrice, centré sur l'axe de révolution de celle-ci. On applique au poinçon froid, au moyen de la presse réglée à la vitesse précitée, une force constante de 35 tonnes. Le lopin se trouve donc comprimé jusqu'à occuper toute la section de la matrice, à la suite de quoi la force de 35 tonnes, représentant par conséquent une pression de 1372 bars, est encore maintenue pendant 30 secondes. A la fin de l'opération on extrait le galet forgé de polybutène de la matrice et on l'abandonne pendant 48 heures, temps à l'issue duquel on mesure ses dimensions. On relève ainsi une hauteur de 6,8 mm et un diamètre de 42,0 mm. Ces dimensions indiquent l'importance du retrait élastique du polybutène-1 en forme I consécutif à l'opération de forgeage, ce retrait étant mesuré par la différence entre le diamètre de la matrice et le diamètre de l'objet fini stabilisé. L'importance de ce phénomène de retrait rend la forme I du polybutène-1 impropre à la transformation par forgeage.

### Exemples 2 à 4

On considère la même installation de forgeage qu'à l'exemple 1. On considère des lopins cylindriques de polybutène-1 homopolymère isotactique en forme cristalline II d'indice de fluidité égal à 0,5 g/10 mn, de diamètre initial $\phi_i$ et hauteur initiale $h_i$ exprimés en millimètres. On conserve chaque lopin dans un four à température constante T°C jusqu'au début de l'opération de forgeage, on le centre au fond de la matrice sur l'axe de révolution de celle-ci puis on applique au poinçon froid, au moyen de la pression réglée à la vitesse de 4 mm/s, une force constante correspondant à une pression P exprimée en bars. Cette pression est maintenue pendant 30 secondes après que le lopin ait été transformé en un galet de section égale à celle de la matrice. Le galet forgé est ensuite extrait de la matrice et abandonné pendant 48 heures. A l'issue de ce temps on mesure son diamètre final $\phi_f$ et sa hauteur finale $h_f$ exprimés en millimètres. Toutes ces données sont rassemblées dans le tableau I ci-après. Elles montrent que le forgeage de la forme II du polybutène-1, avec des taux d'écrasement — définis comme le rapport

$$\frac{h_i - h_f}{h_i}$$

— élevés allant jusqu'à 84% ne s'accompagne pas, surtout à chaud, du retrait élastique important manifesté par la forme cristalline I.

### Tableau I

| Exemple | T°C | P | $h_i$ | $\phi_i$ | $h_f$ | $\phi_f$ |
|---|---|---|---|---|---|---|
| 2 | 20 | 2500 | 20,0 | 30,0 | 7,5 | 48,5 |
| 3 | 65 | 1196 | 40,0 | 25,0 | 9,2 | 50,0 |
| 4 | 65 | 2000 | 35,0 | 20,0 | 5,5 | 50,0 |

Dans le but d'évaluer la stabilité dimensionnelle à chaud des objets ainsi forgés, on place un galet obtenu selon les conditions de l'exemple 3 dans une étuve maintenue à la température constante de 85°C et on mesure, à la précision du centième de millimètre, son diamètre et sa hauteur à l'issue d'un temps de séjour t (exprimé en heures) dans l'étuve. Les résultats de ces mesures figurent dans le tableau II ci-après.

### Tableau II

| t | 0 | 24 | 48 | 144 |
|---|---|---|---|---|
| h | 9,20 | 9,20 | 9,20 | 9,20 |
| $\phi$ | 50,00 | 50,00 | 49,84 | 49,84 |

D'autre part des galets obtenus selon les conditions des exemples 3 et 4 ont été analysés par diffraction du rayonnement X immédiatement après leur éjection de la matrice. Les spectres de diffraction révèlent la présence exclusive de la forme cristalline I du polybutène-1 caractérisée par ses pics aux angles de diffraction $\theta$ suivants:

$\theta = 10,2°$ plan réticulaire (2 1 1)
$\theta = 8,8°$ plan réticulaire (3 0 0)
$\theta = 5,1°$ plan réticulaire (1 1 0)

# 0 011 535

### Exemple 5

On considère l'installation de forgeage de l'exemple 1, dans laquelle la matrice cylindrique est remplacée par une matrice d'engrenage de hauteur 9 mm, de diamètre extérieur 31,3 mm et de diamètre intérieur 17,9 mm. On considère d'autre part un lopin de polybutène-1 homopolymère isotactique en forme cristalline II d'indice de fluidité 0,5 g/10 mn ayant une hauteur de 34 mm et un diamètre de 20 mm.

Jusqu'au début de l'opération de forgeage, ce lopin est maintenu dans une étuve à la température de 50°C. Il est ensuite soumis, au moyen de la presse réglée à la vitesse de 4 mm/s, à une pression de 2000 bars jusqu'à occupation de tout le volume disponible de la matrice par la matière, mais contrairement aux exemples précédents la pression n'est pas maintenue plus longtemps au-delà. La durée du forgeage dans ce cas est donc limitée à la durée nécessaire à la presse, compte tenu de sa vitesse, pour réduire la hauteur du lopin soit 6,25 s. L'engrenage étant alors éjecté de la matrice, on note de suite la très bonne régularité de configuration des dents de l'engrenage. Après avoir abandonné la pièce forgée pendant 48 heures, on mesure ses dimensions et on trouve les valeurs suivantes: hauteur 9,0 mm, diamètre extérieur 31,1 mm, diamètre intérieur 17,9 mm.

Immédiatement après avoir éjecté l'engrenage de la matrice, on l'a analysé par diffraction du rayonnement X d'une part pour un faisceau traversant l'engrenage en son centre et d'autre part pour un faisceau traversant une dent de l'engrenage. Le spectre effectué sur le centre de l'engrenage possède à la fois les pics de diffraction de la phase I et ceux, notamment pour $\theta = 9,0°$ et $\theta = 5,85°$, de la phase II, ce qui montre une transformation cristalline incomplète de la matière. Par contre le spectre effectué sur la dent ne montre que les pics de la phase I.

Cette différence de comportement entre deux parties de l'engrenage peut provenir d'un seuil minimum d'écoulement nécessaire à la transformation de la phase II en phase I. Cette étude est complétée par une analyse enthalpique différentielle effectuée sur deux échantillons du même engrenage, le premier prélevé sur le centre et le second sur une dent. Le premier échantillon se caractérise par un pic de fusion unique à la température de 136°C, correspondant à la phase I. Le second échantillon se caractérise, outre le pic de fusion de la phase I à 136°C, par la présence d'un autre pic de fusion à la température de 119°C. Ce second pic de fusion ne peut pas, compte tenu du spectre de diffraction effectué précédemment sur la dent, être attribué à la phase II, ni à la phase I' pour laquelle la littérature indique une température de fusion de 96°C. Il pourrait être attribué à une phase cristalline jusqu'à présent inconnue du polybutène-1.

### Revendications

1. Procédé de forgeage de polybutène-1 préalablement chauffé, caractérisé en ce que l'on forge ledit polybutène-1 sous la forme cristalline II à une température comprise entre 20° et 90°C, sous une pression comprise entre 784 et 9800 bars pendant une durée comprise entre 1 et 40 secondes.

2. Procédé selon la revendication 1, caractérisé en ce que l'on forge le polybutène-1 sous la forme cristalline II à une température comprise entre 40° et 80°C.

3. Procédé selon l'une des revendications 1 et 2, caractérisé en ce qu'on forge le polybutène-1 sous la forme cristalline II sous une pression comprise entre 1176 et 2940 bars.

4. Procédé selon l'une des revendications 1 à 3, caractérisé en ce qu'on forge le polybutène-1 sous la forme cristalline II pendant une durée inférieure à 12 secondes.

5. Procédé selon l'une des revendications 1 à 4, caractérisé en ce qu'on forge le polybutène-1 sous la forme cristalline II au moyen d'un outillage froid.

6. Procédé selon l'une des revendications 1 à 5, caractérisé en ce que le taux d'écrasement du polybutène-1 est compris entre 65% et 85%.

### Patentansprüche

1. Verfahren zur Warmumformung von vorher erwärmtem Polybuten-1, dadurch gekennzeichnet, daß man das Polybuten-1 in der Kristallform II bei einer Temperatur zwischen 20° und 90°C und unter einem Druck zwischen 784 und 9800 bar während einer Zeitdauer von 1 bis 40 s warmumformt.

2. Verfahren nach Anspruch 1, dadurch gekennzeichnet, daß man das Polybuten-1 in der Kristallform II bei einer Temperatur zwischen 40° und 80°C warmumformt.

3. Verfahren nach Anspruch 1 oder 2, dadurch gekennzeichnet, daß man das Polybuten-1 in der Kristallform II unter einem Druck zwischen 1176 und 2940 bar warmumformt.

4. Verfahren nach einem der Ansprüche 1 bis 3, dadurch gekennzeichnet, daß man das Polybuten-1 in der Kristallform II während einer Zeitdauer von weniger als 12 s warmumformt.

5. Verfahren nach einem der Ansprüche bis 4, dadurch gekennzeichnet, daß man das Polybuten-1 in der Kristallform II mittels eines kalten Werkzeuges warmumformt.

6. Verfahren nach einem der Ansprüche 1 bis 5, dadurch gekennzeichnet, daß der Grad der Druckverformung des Polybuten-1 zwischen 65% und 85% liegt.

**Claims**

1. A process for press-forging preheated polybut-1-ene, characterized in that the said polybut-1-ene is press-forged in the crystalline form II at a temperature between 20° and 90°C, under a pressure between 784 and 9800 bars for a period of 1 to 40 seconds.

2. A process according to claim 1, characterized in that polybut-1-ene is press-forged in the crystalline form II at a temperature between 40° and 80°C.

3. A process according to any of claims 1 and 2, characterized in that polybut-1-ene is press-forged in the crystalline form II under a pressure between 1176 and 2940 bars.

4. A process according to any of claims 1 to 3, characterized in that polybut-1-ene is press-forged in the crystalline form II for a period shorter than 12 seconds.

5. A process according to any of claims 1 to 4, characterized in that polybut-1-ene is press-forged in the crystalline form II by means of a cold apparatus.

6. A process according to any of claims 1 to 5, characterized in that the compression ratio of said polybut-1-ene is between 65% and 85%.